# EUROPÄISCHE PATENTANMELDUNG

(11) **EP 1 965 335 A1**
(43) Veröffentlichungstag der Anmeldung: **03.09.2008**
(21) Anmeldenummer: 08003357.4
(22) Anmeldetag: 25.02.2008
(51) Int. Cl.: G06K 7/00, G06K 19/07

(54) **Werkstückidentifikationssystem**

(30) Priorität: 27.02.2007 DE 202007002838 U
(71) Anmelder: Robert Bosch GmbH, 70469 Stuttgart (DE)
(72) Erfinder: Waser, Bernd, 71672 Marbach (DE); Schimpke, Jürgen, 74321 Bietigheim-Bissingen (DE)
(74) Vertreter: Maiß, Harald

(57) **Zusammenfassung**

Die Erfindung betrifft ein Werkstückidentifikationssystem (10) mit einer Transportstrecke (11) und einem Transportgut (13), das mit einem über ein elektromagnetisches Wechselfeld berührungslos auslesbaren Datenträger (60) versehen ist, wobei das Transportgut (13) einen Werkstückträger (14) zum Transport wenigstens eines Werkstücks (15) umfasst und wobei ein Lesegerät (50) zum Auslesen der Datenträger (60) neben der Transportstrecke (11) angeordnet ist.
Erfindungsgemäß ist auf dem Werkstückträger (14) ein Datenkoppler (30) vorgesehen, der eine erste Spule (32) zur Aufnahme eines elektromagnetischen Wechselfeldes eines Datenträgers (60), der mit dem Werkstück (15) verbunden ist, und eine zweite Spule (35) zum Erzeugen eines elektromagnetischen Wechselfeldes, das vom Lesegerät (50) aufgenommen werden kann, umfasst, wobei die beiden Spulen (31; 35) mit wenigstens einer elektrischen Leitung (37) verbunden sind.

## Beschreibung

Die Erfindung betrifft ein Werkstückidentifikationssystem gemäß dem Oberbegriff von Anspruch 1 und einen Datenkoppler zur Verwendung in dem Werkstückidentifikationssystem.

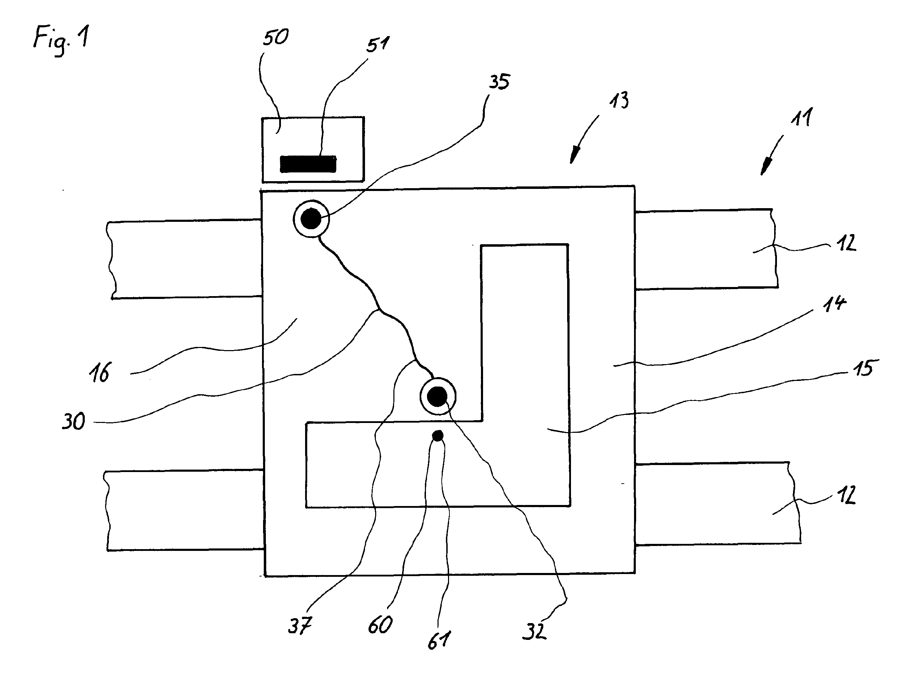

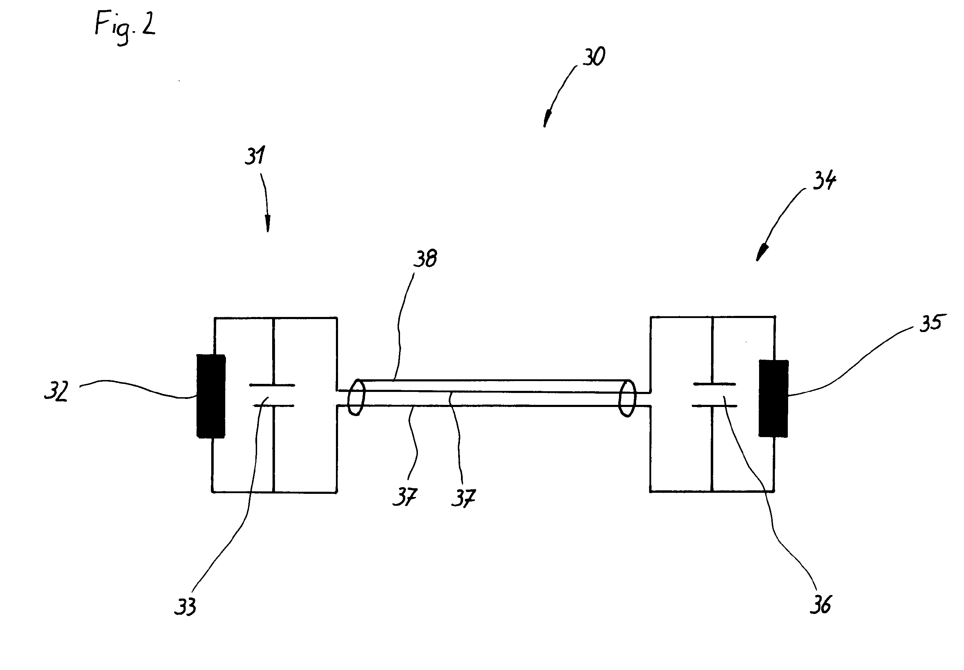

Ein derartiges Werksrückidentifikationssystem ist aus der EP 103 730 A2 bekannt. Die dortige Fig. 1 zeigt ein Werkstückidentifikationssystem mit einer Transportstrecke 10 und mehreren Transportgütern umfassend je einen Werkstückträger 11; 11a; 12; 12a und wenigstens ein Werkstück 14; 14a; 15; 15a. An den Werkstückträgern sind Datenträger 23 angebracht, die von zwei Lesegeräten 19, 20 neben der Transportstrecke ausgelesen werden können. Das Auslesen geschieht berührungslos mittels eines elektromagnetischen Wechselfeldes, das von diversen Spulen 33; 50; 47 (siehe Fig. 2) erzeugt bzw. aufgenommen wird.

Nachteilig an diesem System ist, dass der Abstand zwischen Datenträger und Lesegerät während dem Auslesen sehr klein sein muss, weshalb der Datenträger am Rand des Werkstückträgers angeordnet ist. Der Datenträger ist somit nicht fest mit dem Werkstück verbunden, weshalb die Zuordnung zwischen den Daten auf dem Datenträger und dem Werkstück verloren geht, sobald das Werkstück von dem Werkstückträger heruntergenommen wird.

Man ist daher bestrebt den Datenträger unmittelbar am Werkstück anzubringen. Hierbei kommen üblicherweise besonders kostengünstige und kleine Datenträger zum Einsatz. Um bei diesem Anwendungsfall den zulässigen Leseabstand zwischen Datenträger und Lesegerät zu gewährleisten, muss letztgenanntes sehr nahe am Werkstück angeordnet werden. Hierbei tritt regelmäßig das Problem auf, dass das Lesegerät den Transportweg des Werkstückes versperrt.

Es ist daher Aufgabe der Erfindung, ein Werkstückidentifikationssystem anzugeben, bei dem der Datenträger mit dem Werkstück verbunden ist, wobei das Lesegerät neben der Transportstrecke angeordnet werden kann, so dass der Transportweg des Werkstücks nicht versperrt ist.

Diese Aufgabe wird mit den kennzeichnenden Merkmalen von Anspruch 1 gelöst. Demgemäß ist ein Datenkoppler zum Übertragen des elektromagnetischen Wechselfeldes zwischen dem Datenträger und dem Lesegerät vorgesehen. Das elektromagnetische Wechselfeld muss sich nicht mehr direkt im freien Raum ausbreiten. Es wird vielmehr mittelbar über die elektrische Leitung im Datenkoppler übertragen. Die vom Ausbreitungsweg abhängige Abschwächung des elektromagnetischen Wechselfeldes entfällt. Zur Aufnahme des elektromagnetischen Wechselfeldes von dem Datenträger ist im Datenkoppler eine erste Spule vorgesehen, in der ein Wechselstrom induziert wird. Dieser induzierte Wechselstrom wird über die elektrische Leitung zur zweiten Spule übertragen. Er erzeugt dort wiederum ein elektromagnetisches Wechselfeld, das von der Lesestation aufgenommen werden kann. Der Datenkoppler ist mit dem Werkstückträger verbunden und kann dauerhaft auf diesem verbleiben auch wenn das Werkstück im Lauf des Produktionsprozesses durch ein anderes, gleichartiges ersetzt wird.

Aufgrund von Vorschriften zur Vermeidung von elektromagnetischen Störungen zwischen verschiedenen Geräten darf das erfindungsgemäße Werkstückidentifikationssystem nur elektromagnetische Wechselfelder mit einer bestimmten Frequenz, beispielsweise 125 kHz, und mit einer bestimmten Frequenzbandbreite abstrahlen. Es kann daher vorgesehen sein, dass die erste Spule mit einem ersten Kondensator einen ersten Schwingkreis bildet und dass die zweite Spule mit einem zweiten Kondensator einen zweiten Schwingkreis bildet, wobei die Resonanzfrequenz des ersten Schwingkreises im Wesentlichen gleich der Resonanzfrequenz des zweiten Schwingkreises ist. Die Resonanzfrequenz der beiden Spulen entspricht der o.g. vorgeschriebenen Abstrahlfrequenz. Die Resonanzfrequenzen der beiden Schwingkreise müssen gleich sein, damit die elektrischen Leistungsverluste innerhalb des Datenkopplers besonders gering sind.

Weiter kann vorgesehen sein, dass im Lesegerät eine dritte Spule vorgesehen ist, deren Wicklungsachse parallel zur Wicklungsachse der zweiten Spule ist. Der maximal zulässige Leseabstand zwischen zweiter Spule und Lesegerät ist in diesem Fall besonders groß.

Die Wicklungsachse der zweiten Spule kann senkrecht zur Oberfläche des Werkstückträgers angeordnet sein, wobei um die zweite Spule ein Gehäuse vorgesehen ist, das im Wesentlichen vollständig aus einem elektrisch nicht leitenden Material besteht. In diesem Fall benötigt die zweite Spule einen besonders kleinen Teil der Transportfläche des Werkstückträgers. Das Gehäuse muss aus einem nichtleitenden Material sein, damit das elektromagnetische Wechselfeld, das der zweiten Spule zugeordnet ist, nicht geschwächt wird.

Die zweite Spule ist vorzugsweise am Rand des Werkstückträgers angeordnet, damit der Leseabstand zwischen der zweiten Spule und dem Lesegerät besonders klein ausgeführt werden kann.

Überraschender Weise hat sich gezeigt, dass der vorgeschlagene Datenkoppler gleichzeitig in zwei Übertragungsrichtungen verwendet werden kann. Es kann daher vorgesehen sein, dass auf den Datenträger Daten geschrieben werden können, wobei das Lesegerät gleichzeitig ein Schreibgerät zum Schreiben der Daten ist.

Überraschender Weise hat sich auch gezeigt, dass der Datenkoppler auch zur Energieübertragung geeignet ist. Es wird daher vorgeschlagen, dass der Datenträger über den Datenkoppler vom Lesegerät mit Energie versorgt werden kann. Vorzugsweise ist in dem Datenträger kein Energiespeicher in Form einer Batterie oder eines Akkumulators vorgesehen.

Weiter kann der Datenträger eine stabförmige vierte Spule umfassen, die von einem einstückigen Gehäuse aus einem elektrisch nichtleitenden Material umschlossen ist und vorzugsweise in ein Kunststoffmaterial eingegossen ist, wobei der Datenträger in einer Ausnehmung des Werkstücks angeordnet ist. Ein derartiger Datenträger ist besonders gut geeignet, um bei der Herstellung von Werkstücken eingesetzt zu werden, da er besonders gut gegen Umgebungseinflüsse wie beispielsweise Kühl-/Schmiermittel von Zerspanungsprozessen geschützt ist. Die Anordnung des Datenträgers in einer Ausnehmung des Werkstücks lässt sich besonders einfach bewerkstelligen.

Aufgrund der vielen vorteilhaften Wirkungen des Datenkopplers wird selbständiger Schutz für diesen angestrebt.

Die Erfindung wird im Folgenden anhand der beigefügten Zeichnungen beschrieben. Es stellt dar:
- Fig. 1: eine grobschematische Draufsicht eines erfindungsgemäßen Werkstückidentifikationssystems; und
- Fig. 2: einen Schaltplan des Datenkopplers des Werkstückidentifikationssystems gemäß Fig. 1.

In Fig. 1 ist ein erfindungsgemäßes Werkstückidentifikationssystem ganz allgemein mit 10 bezeichnet. Es umfasst eine Transportstrecke 11 in Form eines Doppelgurtförderers mit zwei Transportbändern 12. Das Transportgut 13 wird von einem Werkstück 15, das auf einem Werkstückträger 14 angeordnet ist, gebildet. Der Werkstückträger 14 wird von den angetriebenen Transportbändern 12 reibschlüssig mitgenommen.

Ein Datenträger 60 ist innerhalb des Werkstücks 15 in einer (nicht dargestellten) Ausnehmung angeordnet. Der Datenträger ist gemäß der US 4 992 794 mit einer vierten Spule 61 ausgeführt. Die Spulenachse ist senkrecht zur Oberfläche 16 des Werkstückträgers ausgerichtet. Die Spule ist auf einen stabförmigen Ferritkern mit kreisförmigem Querschnitt gewickelt. Auf dem Datenträger können beispielsweise eine Seriennummer des Werkstücks oder Prozesseinstellungen für die nächsten Bearbeitungsschritte am Werkstück gespeichert sein.

Neben der Transportstrecke 11 ist ein Lesegerät 50 zum Auslesen des Datenträgers 60 angeordnet. Das Lesegerät 50 ist so platziert, dass es den Transportweg des Werkstückträgers 14 nicht versperrt. In dem Lesegerät 50 ist eine dritte Spule 51 vorgesehen. Diese ist auf einem stabförmigen Kern mit rechteckigem Querschnitt gewickelt, wobei die Spulenachse senkrecht zur Oberfläche 16 des Werkstückträgers ausgerichtet ist. Die breite Seite des Rechteckkerns ist auf die zweite Spule 35 ausgerichtet, damit sich ein großer zulässiger Leseabstand ergibt.

Weiter ist ein Datenkoppler 30 vorgesehen, der das elektromagnetische Wechselfeld, das von der vierten Spule 61 erzeugt wird, zur dritten Spule 51 überträgt. Der Datenkoppler ist fest mit dem Werkstückträger 14 verbunden. Gemäß Fig. 2 umfasst der Datenkoppler 30 die erste Spule 32, die mit einem ersten Kondensator 33 parallel geschaltet ist und so einen ersten Schwingkreis 31 bildet. Weiter ist die zweite Spule 35 vorgesehen, die zusammen mit einem zweiten Kondensator einen zweiten Schwingkreis 34 bildet. Die beiden Schwingkreise sind über ein Kabel mit zwei elektrischen Leitungen 37 parallel geschaltet, wobei das Kabel eine Abschirmung 38 aufweist, um unerwünschte Abstrahlungen zu vermeiden.

Der erste Schwingkreis 31 ist identisch zum zweiten Schwingkreis 34 ausgeführt. Die Spulen sind jeweils auf einen stabförmigen Ferritkern mit kreisförmigem Querschnitt gewickelt, wobei die Stabachsen senkrecht zur Oberfläche 16 des Werkstückträgers ausgerichtet sind. Somit sind die Stabachsen aller vier Spulen 32; 35; 51; 61 parallel zueinander angeordnet. Die Resonanzfrequenz der beiden Schwingkreise 31; 34 beträgt 125 kHz. Beide Schwingkreise sind vollständig in ein zylindrisches Kunststoffgehäuse eingegossen, das an der Außenumfangsfläche mit einem Befestigungsgewinde versehen ist.

Die erste Spule 32 ist so am Rand des Werkstückträgers 14 angeordnet, dass sie durch die Transportstrecke mit geringem Abstand am Lesegerät 50 vorbei bewegt wird. Die zweite Spule 35 ist in unmittelbarer Nähe des Datenträgers angeordnet. Auf diese Weise induziert das elektromagnetische Wechselfeld, das von der vierten Spule 61 erzeugt wird, in der zweiten Spule 35 einen Wechselstrom. Dieser Wechselstrom gelangt über die elektrischen Leitungen 37 zur ersten Spule 32, wodurch wiederum ein elektromagnetisches Wechselfeld erzeugt wird, welches in der dritten Spule 51 einen Wechselstrom induziert. Das Lesegerät dekodiert die im Datenträger gespeicherten Informationen, wie in EP 103 730 A2 beschrieben, aus dem Wechselstrom in der dritten Spule 51.

Das Lesegerät versorgt den Datenträger mit Energie und ist darüber hinaus auch in der Lage, Schreiboperationen auf dem Datenträger 60 auszuführen. Hierfür läuft der soeben beschriebene Prozess in umgekehrter Richtung ab.

### Bezugszeichenliste

- 10: Werkstückidentifikationssystem
- 11: Transportstrecke
- 12: Transportband
- 13: Transportgut
- 14: Werkstückträger
- 15: Werkstück
- 16: Oberfläche des Werkstückträgers

- 30: Datenkoppler
- 31: erster Schwingkreis
- 32: erste Spule
- 33: erster Kondensator
- 34: zweiter Schwingkreis
- 35: zweite Spule
- 36: zweiter Kondensator
- 37: elektrische Leitung
- 38: Abschirmung

- 50: Lesegerät
- 51: dritte Spule

- 60: Datenträger
- 61: vierte Spule

## Patentansprüche

1. Werkstückidentifikationssystem (10) mit einer Transportsstrecke (11) und einem Transportgut (13), das mit einem über ein elektromagnetisches Wechselfeld berührungslos auslesbaren Datenträger (60) versehen ist, wobei das Transportgut (13) einen Werkstückträger (14) zum Transport wenigstens eines Werkstücks (15) umfasst, und wobei ein Lesegerät (50) zum Auslesen der Datenträger (60) neben der Transportstrecke (11) angeordnet ist,
**dadurch gekennzeichnet, dass** auf dem Werkstückträger (14) ein Datenkoppler (30) vorgesehen ist, der eine erste Spule (32) zur Aufnahme eines elektromagnetischen Wechselfeldes eines Datenträgers (60), der mit dem Werkstück (15) verbunden ist, und eine zweite Spule (35) zum Erzeugen eines elektromagnetischen Wechselfeldes, das vom Lesegerät (50) aufgenommen werden kann, umfasst, wobei die beiden Spulen (31; 35) mit wenigstens einer elektrischen Leitung (37) verbunden sind.

2. Werkstückidentifikationssystem nach Anspruch 1,
**dadurch gekennzeichnet, dass** die erste Spule (32) mit einem ersten Kondensator (33) einen ersten Schwingkreis (31) bildet und dass die zweite Spule (35) mit einem zweiten Kondensator (36) einen zweiten Schwingkreis (34) bildet, wobei die Resonanzfrequenz des ersten Schwingkreises (31) im Wesentlichen gleich der Resonanzfrequenz des zweiten Schwingkreises (34) ist.

3. Werkstückidentifikationssystem nach Anspruch 1 oder 2,
**dadurch gekennzeichnet, dass** im Lesegerät (50) eine dritte Spule (51) vorgesehen ist, deren Wicklungsachse parallel zur Wicklungsachse der zweiten Spule (35) ist.

4. Werkstückidentifikationssystem nach Anspruch 3,
**dadurch gekennzeichnet, dass** die Wicklungsachse der zweiten Spule (35) senkrecht zur Oberfläche des Werkstückträgers angeordnet ist, wobei um die zweite Spule (35) ein Gehäuse vorgesehen ist, das im Wesentlichen vollständig aus einem elektrisch nichtleitenden Material besteht.

5. Werkstückidentifikationssystem nach einem der vorstehenden Ansprüche,
**dadurch gekennzeichnet, dass** die zweite Spule (35) am Rand des Werkstückträgers (15) angeordnet ist.

6. Werkstückidentifikationssystem nach einem der vorstehenden Ansprüche,
**dadurch gekennzeichnet, dass** auf den Datenträger (60) Daten geschrieben werden können, wobei das Lesegerät (50) gleichzeitig ein Schreibgerät zum Schreiben der Daten ist.

7. Werkstückidentifikationssystem nach einem der vorstehenden Ansprüche,
**dadurch gekennzeichnet, dass** der Datenträger (60) über den Datenkoppler (30) vom Lesegerät (50) mit Energie versorgt werden kann.

8. Werkstückidentifikationssystem nach einem der vorstehenden Ansprüche,
**dadurch gekennzeichnet, dass** der Datenträger (60) eine stabförmige vierte Spule (61) umfasst, die von einem einstückigen Gehäuse aus einem elektrisch nichtleitenden Material umschlossen ist und vorzugsweise in ein Kunststoffmaterial eingegossen ist, wobei der Datenträger (60) in einer Ausnehmung des Werkstücks (15) angeordnet ist.

9. Datenkoppler gemäß dem Kennzeichenteil einer der vorstehenden Ansprüche zur Verwendung in einem Werkstückidentifikationssystem.
